# EUROPÄISCHE PATENTANMELDUNG

(11) **EP 0 786 425 A2**
(43) Veröffentlichungstag der Anmeldung: **30.07.1997**
(21) Anmeldenummer: 97100904.8
(22) Anmeldetag: 22.01.1997
(51) Int. Cl.: B65G 47/64

(54) **Übergabevorrichtung für in Querreihen oder Gruppen ankommende Gegenstände auf ein Austrageband**

(30) Priorität: 29.01.1996 DE 19603125
(71) Anmelder: Wilhelm Hogenkamp Verpackungstechnik, 30161 Hannover (DE)
(72) Erfinder: Hogenkamp, Wilhelm, 30161 Hannover (DE)
(74) Vertreter: Patentanwälte Rehberg + Hüppe

(57) **Zusammenfassung**

Es wird eine Übergabevorrichtung (1) für auf einem Zuführband (3) in Zuführrichtung (7) in Querreihen oder Gruppen ankommende Gegenstände (6), insbesondere empfindliche Süßwarenteile, wie Kuchenstücke, Neapolitains o. dgl., auf ein Austrageband (4) aufgezeigt. Das Austrageband (4) wird in einer zu der Zufuhrrichtung (7) insbesondere rechtwinklig verlaufenden Austragsrichtung (24) diskontinuierlich angetrieben. Die Übergabevorrichtung (1) weist einen Übertragungsförderer (2) mit einem Rahmen (8) und einem Übertragungsband (11) auf, das über einen Bandantrieb (17) in einer hin- und hergehenden Hubbewegung angetrieben ist. Der Rahmen (8) des Übertragungsförderers (2) weist zwei Umlenkkanten (9, 10) für das Übertragungsband (11) auf. Der Rahmen (8) des Übertragungsförderers (2) ist in einer translatorischen Führung (13) gelagert. Es ist ein Rahmenantrieb (14) für eine hin- und hergehende Hubbewegung des Rahmens (8) relativ zum Übertragungsband (11) vorgesehen.

## Beschreibung

Die Erfindung betrifft eine Übergabevorrichtung für auf einem Zuführband in Zuführrichtung in Querreihen oder Gruppen ankommende Gegenstände, insbesondere empfindliche Süßwarenteile, wie Kuchenstücke, Neapolitains o. dgl., auf ein Austrageband. Das Austrageband ist in der Regel in einer zu der Zufuhrrichtung rechtwinklig verlaufenden Austragsrichtung diskontinuierlich angetrieben. Die Erfindung beschäftigt sich insbesondere mit dem Problem, entweder druck- oder reibungsempfindliche Gegenstände, wie beispielsweise weiche Kuchenstücke, oder insbesondere gruppenweise ankommende Gegenstände, deren genaue Gruppierung bei der Übergabe von einem Band auf das andere nicht verändert werden darf, zu übergeben bzw. zu übertragen. Solche in geordneten Gruppen ankommenden Gegenstände können beispielsweise Neapolitains oder auch Kekse mit einem sehr flach ausgebildeten Rand, beispielsweise in Form von Kugelabschnitten, sein. Diese Gegenstände vertragen es entweder aufgrund ihrer Materialeigenschaften, ihrer Form oder der bereits bewirkten ordnungsgemäßen Ausrichtung innerhalb der Gruppierung nicht, wenn auf sie während der Übergabe von einem Band auf ein weiteres ein Schiebevorgang stattfindet, mit welchem sie beispielsweise auf ein stillstehendes Austrageband aufgeschoben werden. Die dabei zwischen dem Boden der Gegenstände und dem Austrageband notwendigerweise auftretende Reibung würde zu einer Beeinträchtigung führen. Die Erfindung wird insbesondere dann angewendet, wenn das Zuführband und das Austrageband rechtwinklig zueinander angeordnet sind, also die Zuführrichtung und die Austragsrichtung rechtwinklig zueinander verlaufen. Die Erfindung kann aber auch dann angewendet werden, wenn die Zuführrichtung und die Austragsrichtung übereinstimmen. Das Austrageband steht zum Zeitpunkt der Übergabe der Gegenstände still, wird nach der Übergabe in Bewegung gesetzt und vor der nächsten Übergabe wiederum stillgesetzt. Das Zuführband läuft in der Regel kontinuierlich. Solche Übergabevorrichtungen der in Rede stehenden Art werden oft auch als Beschickungsvorrichtungen bezeichnet.

Eine solche Übergabevorrichtung ist aus der DE 28 31 323 C2 bekannt. Diese Übergabevorrichtung dient zur Übergabe bzw. Übertragung von insbesondere Süßwarenteilen, wie Schokoladetafeln- oder - riegel, Pralinen usw. von einem Zuführband auf ein Austrageband. Das Austrageband ist auf tieferem Niveau als das Zuführband angeordnet. Dem Zuführband ist ein in gleicher Höhe und gleicher Richtung arbeitendes Weitergabeband nachgeschaltet. Das Zuführband besitzt an seinem dem Weitergabeband zugekehrten Ende eine nach unten schwenkbare Nase, so daß es bei Durchführung dieser Verschwenkung seinen Anschluß an das Weitergabeband verliert. Unterhalb der von dem Zuführband und dem Weitergabeband gebildeten horizontalen Ebene ist ein Übertragungsband vorgesehen, welches einen Rahmen aufweist, der um ein quer zur Zuführrichtung verlaufende ortsfeste Achse derart schwenkbar ist, daß das Übertragungsband in der einen Stellung Anschluß an die abgesenkte Nase des Zuführbandes und in der anderen Stellung mit dem Austrageband fluchtet. Das U-förmig um den kurzen Rahmen herumgelegte und auf einer Feder aufgehängte Übertragungsband ist lagenveränderlich ausgebildet und um eine Umlenkkante am Rahmen des Übertragungsbandes herumgeführt. Das Übertragungsband kann auch ein endloses, intermittierendes, hin- und herlaufendes Transportband sein, welches mit seinem Antrieb entsprechend umgeschaltet wird. Mit dieser Übertragungsvorrichtung lassen sich Gegenstände von dem Zuführband über das Übertragungsband auf das Austrage- oder Abführband übertragen, die im Vergleich zu den eingangs genannten Kuchenstücken oder Neapolitains vergleichsweise unempfindlich sind, also die entstehende Reibung zwischen den Bodenflächen der Gegenstände und dem Austrageband beim Aufschieben vertragen. Dieser Aufschiebevorgang wird durch einen hin- und hergehenden Antrieb am Übertragungsband in Verbindung mit einem Schieber erreicht, der hinter die Gegenstände faßt und damit den Aufschiebevorgang auf das Austrageband bewirkt. Nachteilig bei dieser bekannten Übergabevorrichtung ist weiterhin, daß das Übertragungsband und das Austrageband unterhalb der von den Zuführband und dem Weitergabeband festgelegten Horizontalebene angeordnet sind. Dies beeinträchtigt die freie Draufsicht und somit die Kontrolle des ordnungsgemäßen Arbeitens im Bereich des Übertragungsbandes und des Austragebandes sowie die Möglichkeit, dort auftretende Fehler schnell zu erkennen und zu beseitigen. Auch Wartungs- und Reinigungsarbeiten an diesen Teilen sind nur erschwert durchzuführen, da die Zugänglichkeit durch das Zuführband und das Weitergabeband auch diesbezüglich beeinträchtigt ist.

Weiterhin sind Förderbänder für die in Rede stehenden Gegenstände bekannt, die ein endloses Band aufweisen, welches im Gegensatz zu dem eingangs geschilderten Übertragungsförderer eine sehr viel größere Länge aufweist und über eine Vielzahl von Umlenkrollen geführt ist. Dieses Band wird in der Regel kontinuierlich umlaufend angetrieben, und es wird nur eine kleine Länge des Bandes als Förderlänge benutzt. Solche Bänder werden in einer Richtung hintereinandergeschaltet, um eine Förderstrecke zu realisieren. Solche Förderbänder können in einer besonderen Ausführung eine in Förderrichtung bzw. entgegen der Förderrichtung verschiebbare Zunge aufweisen, die der zugekehrten Umlenkstelle des Weitergabebandes zugeordnet sind. An dem freien Ende der Zunge wird eine Umlenkstelle gebildet, die unter Anschluß an die Umlenkstelle des Weitergabebandes angeordnet ist, wobei aber auch die Zunge bei sonst stillstehend angeordneten anderen Umlenkstellen des Förderers relativ zu diesen zurückgezogen werden kann, um zwischen der Umlenkstelle am Ende des Förderers und der Umlenkstelle am Beginn des Weitergabebandes eine Lücke zu schaffen und beispielsweise defekte Gegenstände durch diese Lücke fallenzulassen und damit aus dem Förderstrom auszuschleusen.

Die EP 0 666 230 A1 zeigt eine Übergabevorrichtung mit einem Zuführband mit absenkbarer Nase, einem Weitergabeband mit ortsfest angeordneter Umlenkstelle und einem rechtwinklig zur Zuführrichtung angeordneten Austrageband unterhalb der von Zuführband und Weitergabeband gebildeten Horizontalebene. Als Übertragungsförderer zwischen der absenkbaren Nase des Zuführbandes und dem Austrageband ist ein Förderer mit einem umlaufend angetriebenen Endlosband und zurückziehbarer sowie schwenkbarer Zunge vorgesehen, wie er zuvor beschrieben wurde. Durch diese Zunge an dem Endlosband ist es möglich, auch empfindliche Gegenstände, wie Kuchenstücke, Neapolitains o. dgl. ohne Beschädigung und ohne Beeinträchtigung ihrer Gruppierung von einem Zuführband auf ein Austrageband zu überführen. Dazu ist es jedoch erforderlich, die zurückziehbare Zunge des Endlosförderers zusätzlich als absenkbare Nase auszubilden, so daß dieses Förderelement kompliziert aufgebaut ist. Infolge der zahlreichen Umlenkstellen und der entsprechenden Antriebe für den kontinuierlichen Umlauf, das Verschwenken der Zunge und das Zurückziehen der Zunge entsteht ein hoher maschineller Aufwand. Auch der benötigte Bauraum für dieses Element ist erheblich. Nachteilig ist weiterhin, daß auch dieses Förderelement und das Austrageband ausschließlich unterhalb der von dem Zuführband und dem Weitergabeband gebildeten Ebene angeordnet sind, so daß die freie Draufsicht, Überwachung, Reparatur und Säuberung entsprechend behindert sind.

Auch die DE-OS 19 06 366 zeigt ein Zuführband mit schwenkbarer und zurückziehbarer Nase, die entsprechend dem Niveau eines Austragebandes absenkbar ist, wobei allerdings während der Absenkung eine Lücke zu dem Weitergabeband auftritt, so daß nachfolgende Gegenstände nicht auf das Weitergabeband gelangen können. Ein gesondertes Übertragungsband ist nicht vorgesehen. Es ergeben sich ebenfalls die oben beschriebenen Nachteile.

Die CH-PS 657 829 zeigt ein Zuführband mit mehreren Umlenkstellen und mit lediglich zurückziehbarer Nase. Das Zuführband besitzt ein endloses Band mit einem ortsfest an dem Rahmen der Vorrichtung gelagerten Antrieb. An seinem dem Austrageband zugekehrten Ende ist das Band über einen Schlitten geschlungen und über eine weitere ortsfest Umlenkstelle zum Bandantrieb zurückgeführt. Der Schlitten besitzt einen hin- und hergehenden Antrieb, um die Nase relativ zum ortsfest angeordneten Antrieb zurückzuziehen bzw. vorzuschieben und die Gegenstände auf das Austrageband fallen zu lassen.

Der Erfindung liegt die Aufgabe zugrunde, eine Übergabevorrichtung der eingangs beschriebenen Art derart weiterzubilden, daß mit ihr auch empfindliche Gegenstände von einem Zuführband auf ein Austrageband übergeben werden können, ohne daß die für einen Schiebevorgang typische Reibung auftritt.

Erfindungsgemäß wird dies durch die Übergabevorrichtung mit den im Anspruch 1 angegebenen Merkmalen erreicht. Die Erfindung läßt sich auch durch eine Übergabevorrichtung für auf einem Zuführband in Zuführrichtung in Querreihen oder Gruppen ankommende Gegenstände, insbesondere empfindliche Süßwarenteile, wie Kuchenstücke, Neapolitains o. dgl., auf ein Austrageband beschreiben, welches in einer zu der Zufuhrrichtung insbesondere rechtwinklig verlaufenden Austragsrichtung diskontinuierlich angetrieben wird, mit einem Übertragungsförderer, der einen kurzen Rahmen und ein um zwei an seinen beiden Enden angeordnete Umlenkkanten geschlungenes Übertragungsband aufweist, das über einen auf dem Rahmen bzw. einem damit verbundenen Teil, z.B. einer Stange, angeordneten Bandantrieb in einer hin- und hergehenden Hubbewegung angetrieben ist, wobei der Rahmen des Übertragungsförderers bzw. eine damit verbundenes Teil, z.B. Stange, in einer translatorischen Führung gelagert ist und ein Rahmenantrieb für eine hin- und hergehende Hubbewegung des Rahmens in Abstimmung zu dem Bandantrieb vorgesehen ist.

Die Erfindung baut auf einem Übertragungsförderer aus dem eingangs genannten Stand der Technik auf, also auf einem vergleichsweise in Förderrichtung kurz ausgebildeten Element, welches auch in konstruktiver Hinsicht einfach aufgebaut ist und zu seiner Anordnung nur einen geringen Raumbedarf benötigt. Die Erfindung setzt sich damit in Gegensatz zu der Verwendung eines Endlosförderers mit verschwenkbarer und zurückziehbarer Nase. Der Übertragungsförderer erhält einen kurzen Rahmen, der mit zwei Umlenkkanten an seinen beiden Enden ausgestattet wird, über die das Übertragungsband geschlungen wird, welches hier im Vergleich zu einem Endlosförderer eine erheblich kürzere Länge aufweist. Kurze Förderbänder, insbesondere wenn sie relativ breit ausgebildet sind, lassen sich konstruktiv nur sehr schwer gerade führen, wenn sie umlaufend angetrieben sind. Da dies vorliegend nicht der Fall ist, sondern das Übertragungsband nur eine hin- und hergehende Hubbewegung auszuführen hat, lassen sich diese Führungsprobleme in einfacher Weise lösen. Der Rahmen des Übertragungsförderers oder ein damit verbundenes Teil wird in einer translatorischen Führung beweglich gelagert. Es ist ein Rahmenantrieb für eine hin- und hergehende Hubbewegung des Rahmens des Übertragungsförderers vorgesehen, damit die dem Austrageband zugekehrte Umlenkkante bei stillstehendem Übertragungsband zurückgezogen werden kann. Die translatorische Bewegung findet in der Regel in der Geraden statt, jedenfalls so, daß die dem Austrageband zugekehrte Umlenkkante sich parallel zur Oberfläche des Austragebandes und geringfügig oberhalb dieser zurückbewegen läßt, so daß die Gegenstände an das Austrageband ohne Auftritt von Reibung und natürlich auch ohne Schiebebewegung übergeben werden können. Der neue Übertragungsförderer ist ein relativ klein bauendes Förderelement und erbringt den Vorteil, daß es sowohl unterhalb wie auch oberhalb der durch das Zuführband und das Weitergabeband festgelegten Horizontalebene angeordnet werden kann. Insbesondere die Anordnung oberhalb ist vorteilhaft, weil sämtliche Elemente einer solchen Übergabevorrichtung dann zur Überwachung ihrer ordnungsgemäßen Funktion, zur Beseitigung von Störungen, für Reinigungs- und Wartungszwecke usw. gut zugänglich sind. Das neue Übertragungsband kann mit entsprechenden Vorteilen sowohl bei der Übergabevorrichtung nach der DE 28 31 323 C2 als auch bei der Übergabevorrichtung nach der EP 0 666 330 A1 eingesetzt werden. Im letzteren Falle reduziert sich der Bauaufwand erheblich.

Insbesondere kann der Rahmen des Übertragungsförderers um eine parallel zu den Umlenkkanten angeordnete Schwenkachse schwenkbar sein. Eine andere Möglichkeit, die auch zusätzlich angewendet werden kann, besteht darin, daß der Übertragungsförderer mit seinem Rahmen und Übertragungsband höhenverfahrbar ausgebildet ist. Die Schwenkbarkeit bzw. Höhenverfahrbarkeit des Übertragungsförderers kann einerseits dazu genutzt werden, um den Anschluß an das Zuführband, das Weitergabeband, das Austrageband sowie allgemein an andere Bänder zu finden. Aber auch zur Einstellung einer kleinen Fallhöhe für die Gegenstände beim Übergang von dem Übertragungsband auf das Austrageband kann diese Beweglichkeit genutzt werden. Dann ist insbesondere der Übertragungsförderer mit seiner einen Umlenkkante zwischen einem Anschluß an das Zuführband und einem Anschluß an das Austrageband schwenkbar und/oder höhenverfahrbar. Für diese Bewegung sind ein oder mehrere Antriebe vorgesehen, die in entsprechender Abstimmung aufeinander steuerbar sind.

Wenn die Übergabevorrichtung als Beschickungsvorrichtung zwischen eine Produktionsanlage und beispielsweise eine Packstraße mit mehreren Packstationen eingeschaltet wird, ist zur Verteilung der Gegenstände auf mindestens zwei Verarbeitungsstellen dem Zuführband ein in Zuführrichtung arbeitendes Weitergabeband nachgeschaltet. Das dem Weitergabeband bzw. dem Übertragungsband zugekehrte Ende des Zuführbandes ist dann ortsfest angeordnet. Zumindest der dem Ende des Zuführbandes zugekehrte Anfang des Weitergabebandes ist um eine sich quer zur Zuführrichtung erstreckende Achse schwenkbar. Auch andere Zuordnungen sind denkbar und durch die grundsätzliche Ausbildung des Übertragungsbandes möglich. Die hervorgehobene Relativanordnung ist jedoch besonders vorteilhaft, weil das Zuführband keine absenkbare Nase aufweisen muß. Das Übertragungsband ist also hier mehr dem Weitergabeband, also dem Zuführband abgekehrt angeordnet. Zur Vereinfachung in konstruktiver Hinsicht kann es sinnvoll sein, wenn das Übertragungsband und zumindest der schwenkbare Teil des Weitergabebandes mechanisch fest oder beweglich gekoppelt sind. Unter einer festen Kopplung wird eine Ausbildung verstanden, bei der Teile des Übertragungsbandes und des Weitergabebandes einen einzigen Teil darstellen, also beispielsweise die Führung für den Rahmen des Übertragungsbandes ortsfest auf dem Rahmen des Weitergabebandes angeordnet ist. Unter einer beweglichen Kopplung wird eine Konfiguration verstanden, bei der die Teile aneinander angelenkt sind, aber beispielsweise eine Schwenkbewegung oder eine sonstige Bewegung zwischen den Teilen möglich ist.

So kann die Schenkachse des Übertragungsförderers auf dem Rahmen des Weitergabebandes gelagert sein. Es versteht sich, daß die Führung hier zwischengeschaltet ist. Eine andere Möglichkeit besteht darin, das Übertragungsband höhenverfahrbar auszubilden. Dann liegt zwar die Schwenkachse im Unendlichen. Über entsprechende Führungen ist jedoch auch diese Ausführungsform realisierbar.

Von besonderer Bedeutung ist, wenn zwischen dem Übertragungsförderer und dem Zuführband ein Pufferband vorgesehen ist, das einen Pufferrahmen mit zwei Umlenkstellen und ein hin- und hergehend angetriebenes Pufferband aufweist, wobei zumindest der schwenkbare Teil des Weitergabebandes mit dem Pufferrahmen des Pufferbandes mechanisch fest oder beweglich gekoppelt ist. Wenn ein solches Pufferband vorgesehen ist, ist dies zunächst einerseits so relativ angeordnet, wie dies bezüglich des Übertragungsbandes und des Weitergabebandes bisher beschrieben wurde. Durch die Zwischenschaltung des Pufferbandes sind in steuerungstechnischer Hinsicht erhebliche Vorteile möglich. Das Pufferband kann bereits dann wiederum Gegenstände aufnehmen, wenn das Übertragungsband seine vorher aufgenommenen Gegenstände noch nicht an das Austrageband abgegeben hat. Umgekehrt können die auf dem Pufferband geparkten Gegenstände bereits dann an das Übertragungsband weitergegeben werden, wenn zwar das Übertragungsband leer ist, aber das Austrageband an der betreffenden Stelle noch mit Gegenständen besetzt ist. Mit dieser Anordnung läßt sich u. U. die Vielzahl der Übergabevorrichtungen innerhalb einer Packstraße reduzieren. Weiterhin tritt der besondere Vorteil auf, daß mit größerer Sicherheit als bisher Lücken zwischen übergebenen Gegenständen auf dem Austrageband vermieden werden können. Es versteht sich, daß das Übertragungsband in diesem Falle zwischen einem Anschluß an das Pufferband und einem Anschluß an das Austrageband hin- und herverschwenkbar und/oder höhenverfahrbar angeordnet ist.

Das Pufferband, das Übertragungsband und das Austrageband können oberhalb oder unterhalb der durch das Zuführband festgelegten Horizontalebene angeordnet sein. Es sind hier sämtliche Möglichkeiten offen. Die Anordnung oberhalb der durch das Zuführband festgelegten Horizontalebene ist besonders vorteilhaft, weil dann die Elemente der Übertragungsvorrichtung zu Überwachungs-, Reinigungs und/oder Reparaturzwecken frei zugänglich sind. Außerdem kann dabei der Abstand zwischen dem Zuführband und dem Weitergabeband kurz gestaltet werden. Insbesondere ist es möglich, daß das Pufferband und zumindest der schwenkbare Teil des Weitergabebandes einen gemeinsamen Rahmen aufweisen.

Der Rahmen des Übertragungsbandes kann in der translatorischen Führung entweder auf dem Weitergabeband oder aber auch auf dem Zuführband gelagert sein. Dies bedeutet, daß letztendlich der Rahmen des Übertragungsbandes in der translatorischen Führung geführt ist, die zweckmäßig ortsfest angeordnet ist, und zwar entweder direkt an dem Rahmen der Übertragungsvorrichtung, an dem auch das Zuführband mit seinem Rahmen gelagert ist, oder in einer Ausbildungsform, in welcher der Rahmen des Übertragungsbandes direkt auf dem Rahmen des Zuführbandes gelagert ist.

Die Erfindung wird anhand bevorzugter Ausführungsbeispiele weiter erläutert und beschrieben. Es zeigen:
- Fig. 1: eine schematisierte Seitenansicht einer ersten Ausführungsform der Übergabevorrichtung mit ihren wesentlichen Elementen,
- Fig. 2: eine schematisierte Seitenansicht der Übergabevorrichtung gemäß Fig. 1 in einer Zwischenstellung,
- Fig. 3: eine weitere Zwischenstellung der Übergabevorrichtung,
- Fig. 4: eine weitere Zwischenstellung der Übergabevorrichtung,
- Fig. 5: eine Seitenansicht der Übergabevorrichtung in anderem Zusammenhang,
- Fig. 6a + 6b: eine Folge von Zwischenschritten der Übergabevorrichtung gemäß Fig. 5 zur Verdeutlichung ihrer Arbeitsweise,
- Fig. 7a + 7b: eine Folge von Zwischenschritten einer weiteren Ausführungsform der Übertragungsvorrichtung mit Pufferband und
- Fig. 8a + 8b: eine Folge von Zwischenstellungen einer weiteren Ausführungsform der Übergabevorrichtung.

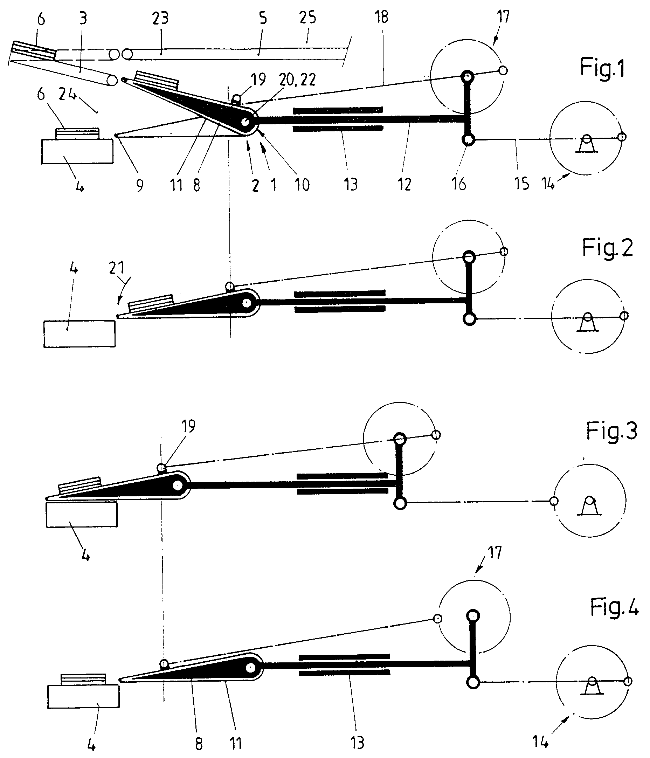

In Fig. 1 ist in stark schematisierter Seitenansicht die Übergabevorrichtung 1 dargestellt, dessen wesentliches Element ein Übertragungsförderer 2 ist, der zwischen das Ende eines Zuführbandes 3 und ein Austrageband 4 eingeschaltet ist. Dem Zuführband 3 ist ein Weitergabeband 5 zugeordnet, insbesondere dann, wenn die Übergabevorrichtung 1, beispielsweise innerhalb einer Packstraße, mehrfach hintereinander angeordnet ist.

Auf dem Zuführband 3 kommen Gegenstände 6 in mehr oder weniger kontinuierlicher Förderung in Zuführrichtung 7 an. Die Gegenstände 6 können beispielsweise aus einer Herstellanlage austreten und in Querreihen (eine einzelne Reihe quer zur Zuführrichtung 7) oder in Gruppen (feldmäßige Anordnung einer Vielzahl von Gegenständen) anfallen. Mit Hilfe des Übertragungsförderers 2 der Übergabevorrichtung 1 sollen diese Gegenstände 6 ohne Beschädigung und ohne Beeinträchtigung ihrer gegenseitigen Ausrichtung auf das Austrageband 4 übergeben bzw. überführt werden. Der Übertragungsförderer 2 weist einen Rahmen 8 auf, der im Vergleich zu einem Rahmen eines Endlosförderers relativ kurz gestaltet ist und lediglich zwei Umlenkstellen 9 und 10 bildet, um die ein ebenfalls entsprechend kurz gestaltetes Übertragungsband 11 geschlungen ist. Um Gegenstände 6 mit dem Übertragungsförderer 2 leicht aufnehmen und auch wieder mit geringer Fallhöhe abgeben zu können, ist die Umlenkstelle 9 insbesondere als Messerkante ausgebildet. Sie kann aber auch als Walze oder Rolle ausgebildet sein und einen entsprechend kleinen Durchmesser aufweisen. Die Größe der Ausbildung der Umlenkstelle 10 mit ihrem Radius ist dagegen unkritisch und kann vergleichsweise größer gestaltet werden. Zu dem Rahmen 8 gehört eine Stange 12, die in einer translatorisch wirkenden Führung 13 verschieblich gelagert ist. Der Rahmen 8 und die Stange 12 können einstückig ausgebildet sein, also fest miteinander verbunden sein, so daß in diesem Falle der gesamte Rahmen 8 lediglich eine translatorische Hubbewegung ausführen kann. Für die Aufbringung dieser hin- und hergehenden Hubbewegung des Rahmens 8 ist ein Rahmenantrieb 14, hier in Form eines Kurbeltriebes, angedeutet, dessen Pleuelstange 15 an einem Gelenk 16 am Rahmen 8 bzw. der Stange 12 angreift.

Für den Antrieb des Übertragungsbandes 11 des Übertragungsförderers 2 um die Umlenkstellen 9 und 10 ist auf dem Rahmen 8 ist ein Bandantrieb 17 vorgesehen, der auch, wie angedeutet, als Kurbeltrieb ausgebildet sein kann. Die Pleuelstange 18 des Bandantriebes 17 greift in einem Gelenk 19 an, welches mit dem Übertragungsband 11 direkt verbunden ist. Bei Betätigung des Bandantriebes 17 und stillstehend angeordnetem Rahmen 8 wird über das Gelenk 19 ein hin- und hergehender Antrieb auf das Übertragungsband 11 ausgeübt, so daß dieses relativ zu den Umlenkstellen 9 und 10 eine intermittierend vorwärts und rückwärts gerichtete Bewegung ausführt. Umgekehrt kann bei stillgesetztem Bandantrieb 17 durch Betätigung des Rahmenantriebes 14 dem Rahmen 8 des Übertragungsförderers 2 mit dem Übertragungsband 11 ebenfalls eine hin- und hergehende Hubbewegung erteilt werden.

In dem dargestellten Ausführungsbeispiel ist der Rahmen 8 gegenüber der Stange 12 um eine Schwenkachse 20 in dem dargestellten Winkelbereich gemäß Pfeil 21 (Fig. 2) hin- und herschwenkbar, so daß die Umlenkkante 9 im einen Falle (Fig. 1) Anschluß an das Ende des Zuführbandes 3 hat, während die Umlenkstelle 9 gemäß Fig. 2 sich oberhalb der Ebene des Austragebandes 4 befindet. Für diese Schwenkbewegung des Rahmens 8 um die Schwenkachse 20 kann ein nur durch das Bezugszeichen angedeuteter Antrieb 22 vorgesehen sein. Statt dieser Schwenkbewegung und/oder zusätzlich dazu kann auch ein höhenveränderlicher Antrieb vorgesehen sein, mit welchem der gesamte Rahmen 8 einschließlich einer eventuellen Stange 12 sowie der Führung 13 und dem Rahmenantrieb 14 sowie dem Bandantrieb 17 höhenverfahrbar vorgesehen sind. Damit wird letztlich der gesamte Übertragungsförderer 2 höhenverfahrbar ausgebildet und angeordnet. Auch diese Bewegung dient in erster Linie dazu, zum einen Anschluß an das Ende des Zuführbandes 3 und in der anderen Endstellung Anschluß an das Austrageband 4 zu finden. Bei dem in Fig. 1 dargestellten Ausführungsbeispiel ist das dem Übertragungsförderer 2 zugekehrte Ende des Zuführbandes 3 etwa nach Art einer absenkbaren Zunge ausgebildet, so daß das Zuführband 3 in der einen Stellung Anschluß an das Weitergabeband 5 und in der anderen Stellung Anschluß an das hochgeschwenkte Übertragungsband 11 des Übertragungsförderers 2 hat. In diesem Falle ist der Anfang 23 des Weitergabebandes 5 ortsfest angeordnet, also nicht absenkbar.

Auf dem Auftragsband 4 werden die Gegenstände 6 in Austragsrichtung 24 hinweggefördert, wenn das Austrageband 4 angetrieben wird. Das Austrageband 4 wird intermittierend angetrieben, wobei es sich in Austragsrichtung 24 senkrecht zur Zeichenebene der Fig. 1 bewegt. Für den Übergabevorgang von Gegenständen 6 von dem Übertragungsförderer 2 auf das Austrageband 4 steht das Austrageband 4 still.

Die Folge der Darstellungen in den Fig. 1 bis 4 verdeutlicht die grundsätzliche Arbeitsweise des Übertragungsförderers 2 bzw. der Übergabevorrichtung. Zur besseren Klarheit ist das Zuführband 3 und das Weitergabeband 5 nur in Fig. 1 dargestellt. In dieser Stellung ist der Rahmen 8 und damit das Übertragungsband 11 des Übertragungsförderers 2 vermittels des Antriebes 22 hochgeschwenkt, so daß die Umlenkstelle 9 an die abgesenkte Nase des Zuführbandes 3 unmittelbar Anschluß hat. Wenn eine Querreihe oder Gruppe von Gegenständen 6 auf dem Zuführband 3 ankommt und auf das Übertragungsband 11 übergeben werden soll, wird der Bandantrieb 17 aus einer nicht dargestellten Stellung heraus etwa um 180° des Kurbeltriebes in Tätigkeit gesetzt, so daß am Ende dieser Bewegung die Stellung gemäß Fig. 1 erreicht wird. Dies geschieht zweckmäßig so, daß die Fördergeschwindigkeiten auf dem Zuführband 3 und an dem Übertragungsband 11 übereinstimmen. Demzufolge wird eine Querreihe oder Gruppe von Gegenständen 6 von dem Übertragungsband 11 aufgenommen, ohne daß beim Übergang Reibung zwischen dem Boden der Gegenstände 6 und dem Übertragungsband 11 eintritt. Nach der Übernahme wird der Bandantrieb 17 in der in Fig. 1 dargestellten Stellung stillgesetzt. Anschließend wird der Antrieb 22 in Tätigkeit gesetzt, so daß der Rahmen 8 mit dem darumgeschlungenen Übertragungsband 11 gemäß Pfeil 21 in die in Fig. 2 dargestellte Stellung verschwenkt wird, in welcher die Umlenkstelle 9 sich geringfügig oberhalb der durch das Austrageband 4 definierten Ebene befindet. Nun wird der Rahmenantrieb 14 um etwa 180° in Tätigkeit gesetzt, so daß der Rahmen 8 des Übertragungsförderers 2 vermittels der ortsfest angeordneten Führung 13 eine translatorische Bewegung ausführt, deren Ende in Fig. 3 dargestellt ist. Mit dieser Bewegung wurde auch der Bandantrieb 17 translatorisch verschoben, wobei dieser Bandantrieb 17 selbst stillsteht. Damit gelangt die Spitze des Übertragungsförderers mit der Umlenkstelle 9 in eine Relativlage zur Oberfläche des Austragebandes 4, wie es in Fig. 3 dargestellt ist. Aus dieser Stellung heraus werden nun sowohl der Rahmenantrieb 14 wie auch der Bandantrieb 17 gleichzeitig betätigt, und zwar so, daß sich die Stellung des Gelenkes 19 an dem Übertragungsband 11 nicht verändert. Dies bedeutet, daß bei stillstehendem Gegenstand 6 der Rahmen 8 und der Teil des Übertragungsbandes 11, der die Umlenkstelle 9 umgibt, gleichsam gemeinsam unter dem Gegenstand 6 bzw. der Querreihe und Gruppe der Gegenstände 6 nach rückwärts hinweggezogen wird, so daß sich die empfindlichen Gegenstände 6 ohne eine Schiebebewegung und ohne Auftreten von Reibung auf die ebenfalls stillstehende Oberfläche des Austragebandes 4 auflegen bzw. absenken können. Die Gegenstände 6 werden damit optimal schonend auf das Austrageband 4 übergeben. Um anschließend wiederum die Aufnahmebereitschaft des Übertragungsbandes 11 zu erzielen, wird ausgehend von Fig. 4 der Antrieb 22 entgegen der Richtung des Pfeiles 21 betätigt. In der Folge schließt dann wiederum der Zyklus der Fig. 1 bis 4 an. Es versteht sich, daß zwischenzeitlich das Austrageband 4 zumindest um die Länge der Querreihe der Gegenstände 6 angetrieben wurde, so daß die entsprechende Oberfläche am Austrageband 4 für die Aufnahme neuer Gegenstände wieder zur Verfügung steht.

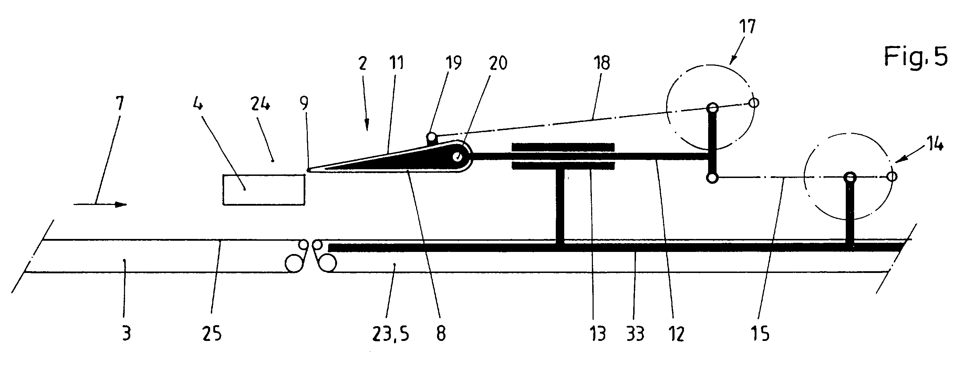

Während Fig. 1 eine Ausführungsform verdeutlicht, bei der der Übertragungsförderer 2 unterhalb einer Horizontalebene 25 angeordnet ist, die von der Oberfläche des Zuführbandes 3 bzw. des Weitergabebandes 5 festgelegt ist, zeigt Fig. 5 eine Ausführungsform, bei der der Übertragungsförderer 2 oberhalb dieser Horizontalebene 25 angeordnet ist. Das dem Weitergabeband 5 zugekehrte Ende des Zuführbandes 3 ist hier ortsfest vorgesehen, also nicht absenkbar oder anhebbar, so daß die Horizontalebene 25 durch die Oberfläche des Zuführbandes 3 festgelegt ist. Das Weitergabeband 5 besitzt einen Rahmen 33, auf dem auch die translatorische Führung 13 des Übertragungsförderers 2 angeordnet ist. Das vordere Ende 23 des Weitergabebandes 5 kann um eine nicht dargestellte Achse abgesenkt und angehoben werden, wie dies in Fig. 1 in entsprechender Anordnung des Endes des Zuführbandes 3 analog angedeutet ist. Der Übertragungsförderer 2 ist damit hier auf dem Rahmen 33 des Weitergabebandes 5 gelagert. Er besitzt ebenfalls einen Rahmenantrieb 14 und einen Bandantrieb 17. Das vordere Ende 23 des Weitergabebandes 5 kann so abgesenkt werden, daß die Umlenkstelle 9 des Übertragungsbandes 11 Anschluß an das Ende des Zuführbandes 3 hat, damit der Übertragungsförderer 2 Gegenstände 6 von dem Zuführband 3 aufnehmen kann.

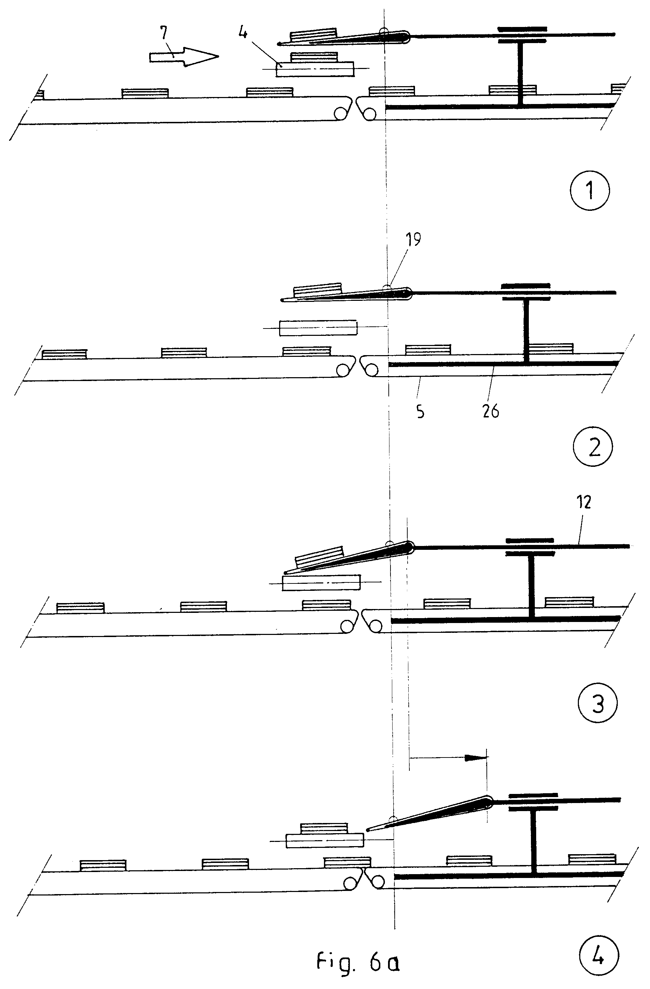

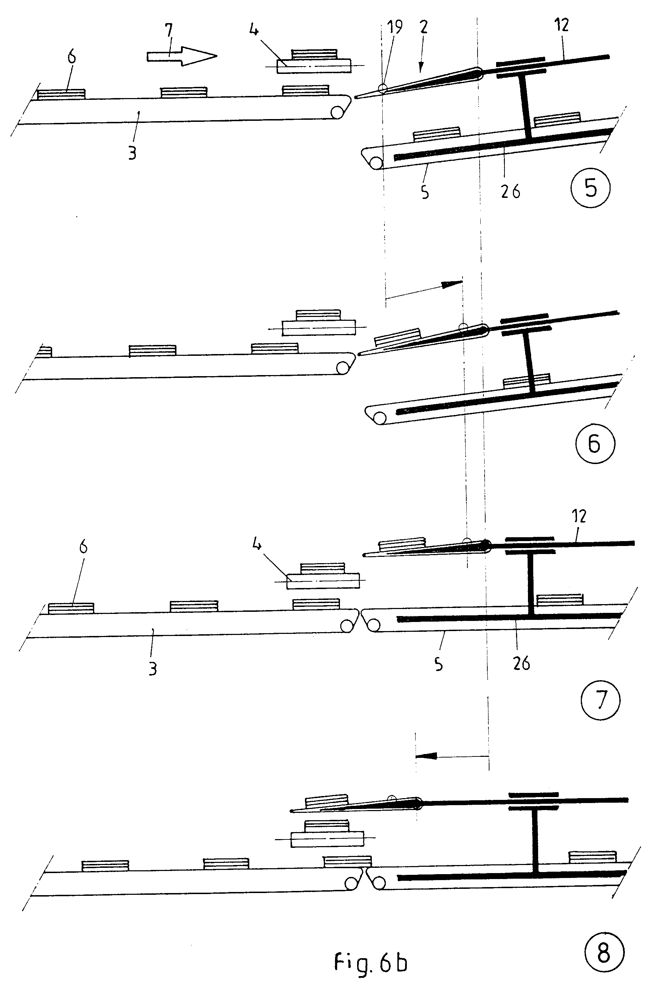

In Fig. 6a und 6b ist eine Folge von acht Stellungen des Übertragungsförderers gemäß Fig. 5 dargestellt, um die Arbeitsweise zu verdeutlichen. Ausgehend von der Stellung 5 gemäß Fig. 6b besitzt die Umlenkstelle 9 des Übertragungsförderers 2 Anschluß an das Ende des Zuführbandes 3, so daß auf dem Zuführband 3 ankommende Gegenstände 6 in Zuführrichtung 7 von dem Übertragungsförderer 2 bzw. dem Übertragungsband 11 aufgenommen werden können. Zu diesem Zweck wird bei stillstehendem Rahmen 8 das Übertragungsband 11 vermittels des Bandantriebes 17 so angetrieben, wie dies durch den Übergang von der Stellung 5 auf die Stellung 6 erkennbar ist. Bei stillstehendem Rahmen 8 bewegt sich somit das Übertragungsband 11 in der dargestellten Richtung und mit der Geschwindigkeit des Zuführbandes 3, so daß eine Querreihe oder eine Gruppe von Gegenständen 6 auf den Übertragungsförderer 2 gelangen. In der Stellung 6 wird sodann der Bandantrieb 17 stillgesetzt, und das vordere Ende 23 des Weitergabebandes 5, welches kontinuierlich angetrieben wird, sowie der Übertragungsförderer 2 selbst werden in die Stellung 7 verschwenkt, so daß das Übertragungsband 5 wiederum Anschluß an das Zuführband 3 hat. Weitere ankommende Gegenstände 6 können damit unmittelbar von dem Zuführband 3 auf das Weitergabeband 5 gelangen. Sobald vorher auf dem Austrageband 4 abgesetzte Gegenstände 6 die Übergabestelle verlassen haben, also das Austrageband 4 wiederum bereit zur Aufnahme weiterer Gegenstände ist - oder bereits auch vorher - wird durch Betätigung des Rahmenantriebes 14 allein die in Fig. 6 dargestellte Stellung 8 erreicht. Diese stimmt grundsätzlich mit der Stellung 1 der Fig. 6 überein. Sobald das Austrageband 4 gemäß der Stellung 2 freigeworden ist, also zur Übernahme von Gegenständen 6 bereit ist, wird der Antrieb 22 unter Absenkung der Umlenkstelle 9 relativ zum Austrageband 4 in Tätigkeit gesetzt, wobei die Endlage in Stellung 3 ersichtlich ist. Aus dieser Stellung 3 heraus wird der Rahmenantrieb 14 in Tätigkeit gesetzt, wobei der Bandantrieb 17 stillsteht. Damit wird die Umlenkstelle 9 des Übertragungsbandes 11 nach rückwärts unter dem Gegenstand 6 hinweggezogen, und der Gegenstand selbst gelangt reibungsfrei auf die Oberfläche des Austragebandes 4, wie dies die Stellung 8 der Fig. 6b zeigt. Während dieser Übergabe werden weitere Querreihen bzw. Gruppen von Gegenständen 6 von dem Zuführband 3 auf das Weitergabeband 5 übergeben. Sobald das Übertragungsband 11 frei ist, kann der Zyklus von neuem beginnen, und es erfolgt die Absenkung des Übertragungsförderers 2 und des Weitergabebandes 5 in die Stellung 5.

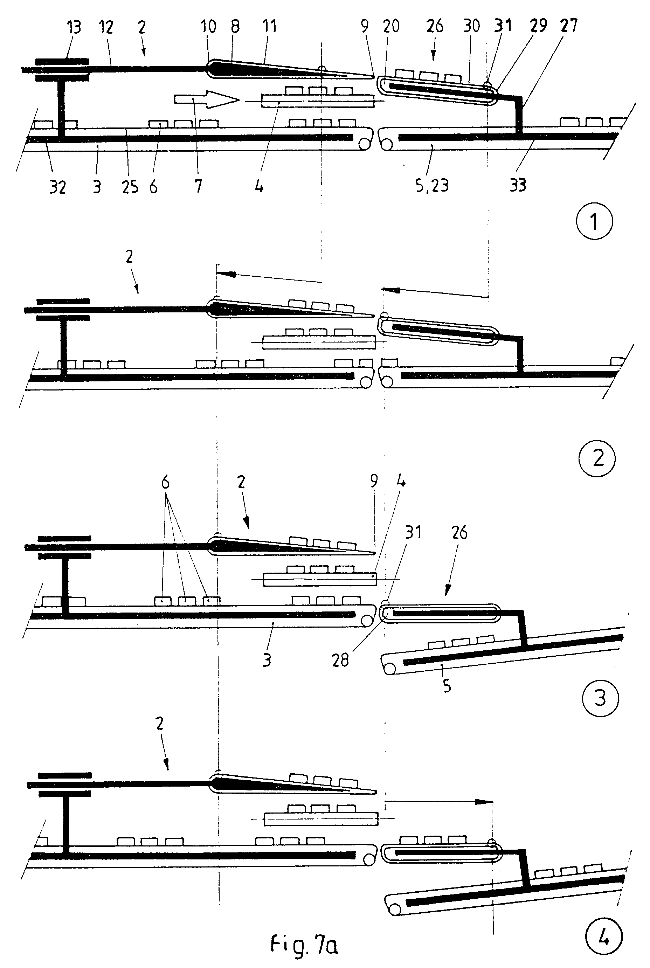

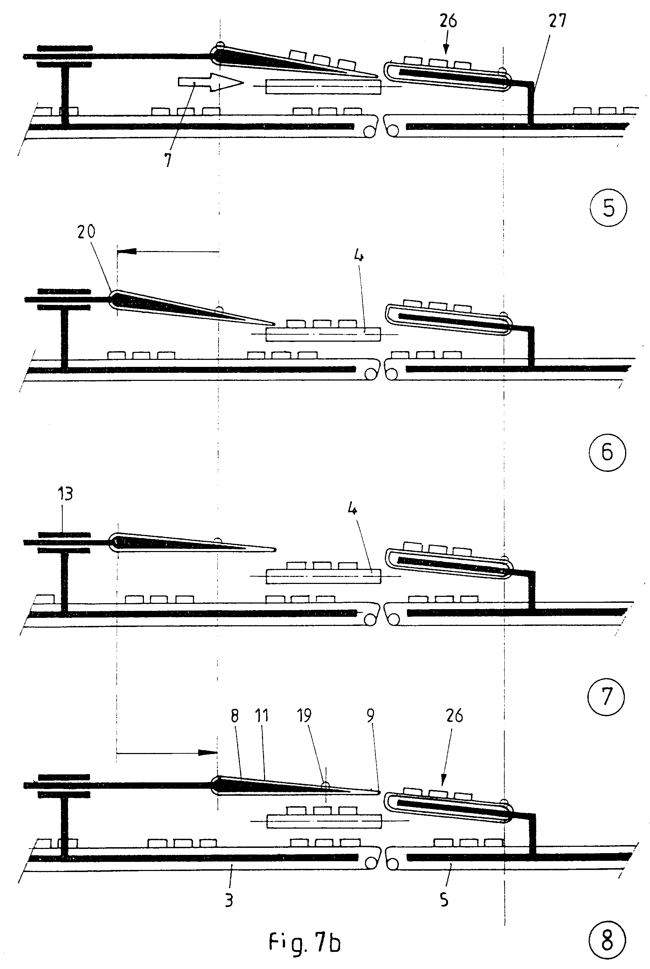

Die in Fig. 7a und 7b dargestellte Ausführungsform des Übertragungsförderers 2 stimmt sinngemäß mit den bisher beschriebenen Ausführungsformen überein, lediglich die Relativanordnung zu dem Zuführband 3 und dem Weitergabeband 5 ist anders. Zusätzlich ist ein Pufferband 26 vorgesehen, welches dem Übertragungsförderer 2 vorgeschaltet ist, wobei das Pufferband 26 dem Weitergabeband 5 zugeordnet ist, während der Übertragungsförderer 2 mehr dem Zuführband 3 zugeordnet ist. Im Einzelnen besitzt das Pufferband 26 einen Pufferrahmen 27, der ortsfest bzw. einstückig mit dem Rahmen 33 des Weitergabebandes 5 ausgebildet ist. Auf dem Pufferband 26 sind ähnlich wie zuvor auf dem Übertragungsförderer 2 bzw. Übertragungsband 11 zwei Umlenkstellen 28 und 29 vorgesehen, um die ein Band 30 geschlungen ist, ähnlich wie das Übertragungsband 11 des Übertragungsförderers 2 um die Umlenkstellen 9 und 10. Das Band 30 des Pufferbandes 26 ist mit einem Gelenk 31 ausgestattet, welches mit dem Gelenk 19 des Übertragungsbandes 11 verglichen werden kann und an welchem ein nicht näher dargestellter Antrieb für eine hin- und hergehende Bewegung des Bandes 30 relativ um die Umlenkstellen 28 und 29 vorgesehen ist. Wie erkennbar, ist damit das Pufferband 26 ebenfalls in der Lage, Gegenstände 6 ohne Schiebebewegung reibungsfrei aufzunehmen bzw. abzugeben, wenn die anschließenden Bänder mit übereinstimmender Geschwindigkeit wie das Band 30 in der entsprechenden Richtung angetrieben werden.

Der Übertragungsförderer 2 ist hier dem Zuführband 3 zugeordnet. Das Zuführband 3 besitzt einen Rahmen 32, auf dem die Führung 13 des Übertragungsförderers 2 angeordnet ist. Da der Rahmen 32 ortsfest angeordnet ist, könnte die Führung 13 auch unabhängig von dem Rahmen 32 ortsfest angeordnet sein. In der Führung 13 wird auch hier wiederum der Rahmen 8 bzw. die Stange 12 des Übertragungsförderers 2 gehalten. Es versteht sich, daß auch hier die Antriebe 14 und 17 vorhanden sind, die aus Übersichtlichkeitsgründen nicht dargestellt sind.

Der Arbeitszyklus der Ausführungsform gemäß Fig. 7 sei ausgehend von der Stellung 3 beschrieben. In der Stellung 3 hat das Pufferband 26 Anschluß an das Zuführband 3, so daß durch Angriff des Antriebes an dem Gelenk 31 eine Gruppe von Gegenständen 6 von dem Zuführband 3 auf das Pufferband 26 gelangen kann, wie dies Stellung 4 zeigt. Die vorangehend geförderte Gruppe von Gegenständen 6 wird während dieser Bewegung auf dem Weitergabeband 5 weitertransportiert. Gemäß Stellung 5 ist das vordere Ende 23 des Zuführbandes 5 sowie des Pufferbandes 26 entsprechend angehoben worden, so daß weiterhin ankommende Gegenstände auf dem Zuführband 3 nunmehr wieder an das Weitergabeband 5 abgegeben werden. Das Pufferband 26 wird stillgesetzt, weil der Übertragungsförderer 2 noch nicht zur Übernahme von Gegenständen 6 bereit ist. Sobald das Austrageband 4 frei ist, wird die Umlenkstelle 9 des Übertragungsförderers gemäß Stellung 5 abgesenkt, und es erfolgt das Zurückziehen des Rahmens 8 des Übertragungsförderers vermittels Steuerung des Rahmenantriebs 14, wie dies der Übergang zwischen den Stellungen 5 und 6 zeigt. Dabei werden die Gegenstände reibungsfrei von dem Übertragungsförderer 2 auf das Austrageband 4 abgelegt. Gemäß Stellung 7 wird der Rahmen 8 des Übertragungsförderers um die Schwenkachse 20 verschwenkt, so daß die Umlenkstelle 9 angehoben wird und der Rahmenantrieb 14 dann wiederum in Tätigkeit gesetzt werden kann. Es wird die Stellung 8 erreicht, in der das Pufferband und das Übertragungsband 11 des Übertragungsförderers 2 Anschluß aneinander haben. Aus dieser Stellung 8 heraus können Gegenstände wiederum von dem Pufferband 26 auf das Übertragungsband 11 übergeben werden, und zwar auch dann, wenn das Austrageband 4 noch keine Freigabe meldet. Nach der Übergabe von Gegenständen auf das Übertragungsband 11 wird die Stellung 2 erreicht. Damit ist das Pufferband 26 wieder frei und zur Aufnahme einer weiteren Querreihe oder Gruppen von Gegenständen 6 bereit, so daß sich die Stellungen 3 und 4 wieder anschließen können. Der Zyklus ist damit geschlossen. Die Übergabe der Gegenstände 6 von dem Übertragungsband 11 auf das Austrageband 4 erfolgt erst dann, wenn das Übertragungsband 11 eine Freigabe meldet. Der wesentliche Vorteil der Zwischenschaltung des Pufferbandes 26 liegt darin, daß vergleichsweise mehr Gruppen von Gegenständen innerhalb einer Übergabevorrichtung 1 gehandhabt werden können. Unabhängig davon bietet sich hier eine Möglichkeit, die Gegenstände 6 ohne Auftreten von Lücken auf das Austrageband 4 zu überführen, also beispielsweise eine lückenlose Reihe von Gegenständen 6 auf dem Austrageband 4 zu erzeugen.

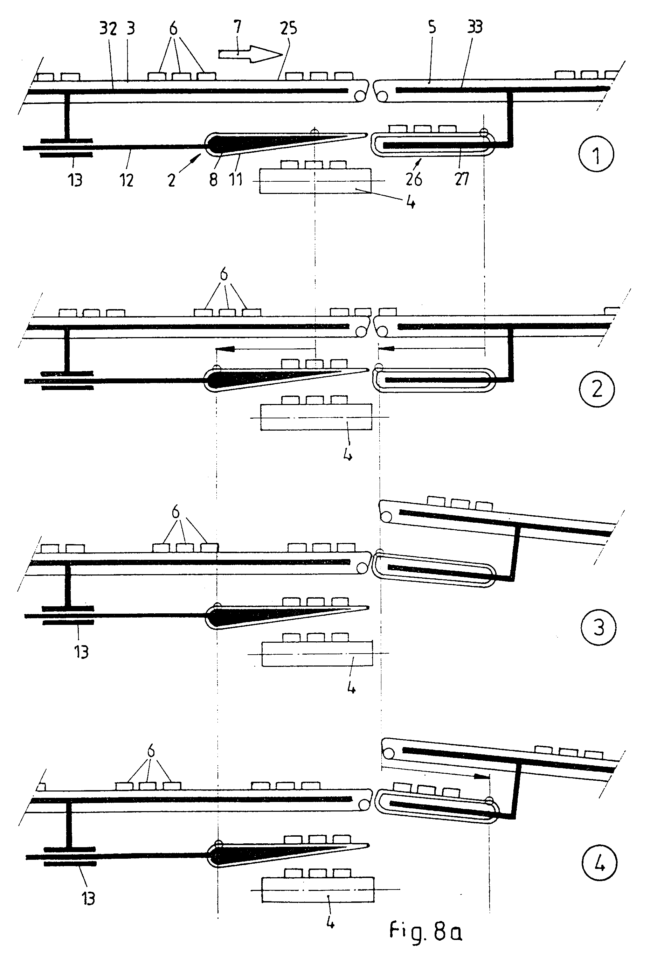

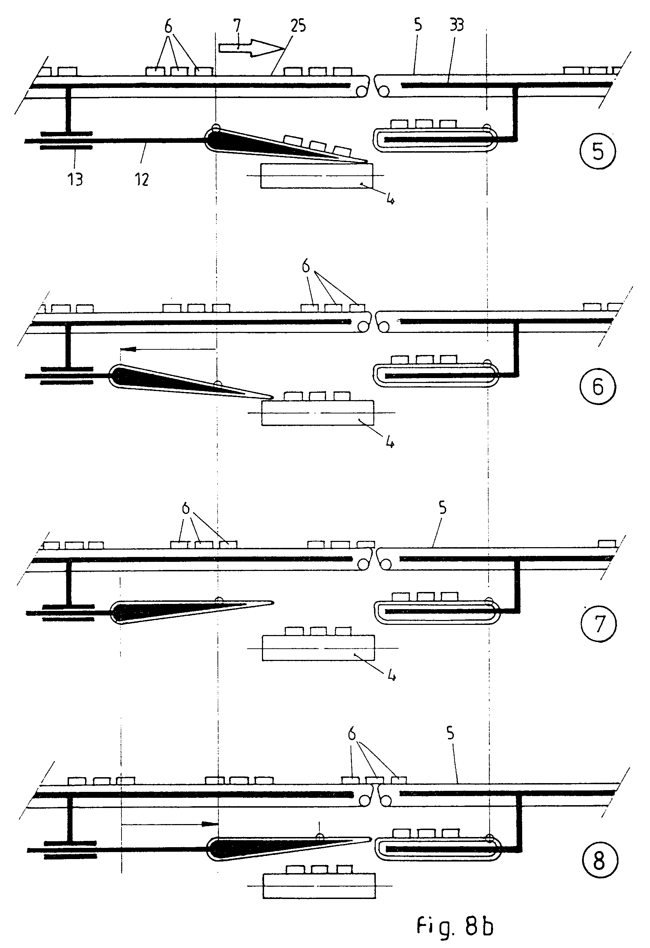

Die Ausführungsform gemäß Fig. 8a und 8b stimmt in weiten Bereichen mit der Ausführungsform gemäß Fig. 7 überein. Das Pufferband 26 ist auch hier dem Weitergabeband 5 zugekehrt angeordnet, während das Übertragungsband 11 auf der Seite des Zuführbandes 3 vorgesehen ist. Das Übertragungsband 11, das Austrageband 4 und das Pufferband 26 sind hier unterhalb der Horizontalebene 25 angeordnet, die durch die Oberfläche des Zuführbandes 3 festgelegt wird. Der Arbeitszyklus möge in Stellung 3 beginnen, in welchem das Pufferband 26 Anschluß an das Zuführband 3 hat. Die übrigen Schaltzyklen und Stellungen schließen sich sinngemäß an, wie dies anhand des Ausführungsbeispieles gemäß Fig. 7 bereits beschrieben wurde.

Wichtig ist es zu erkennen, daß die dargestellten Konfigurationen und relativen Zuordnungen zu dem Zuführband 3, Weitergabeband 5, mit und ohne Pufferband 26 durch die grundsätzliche Ausbildung des Übertragungsförderers 2 möglich werden, wie dies einleitend beschrieben wurde.

| **BEZUGSZEICHENLISTE** | | | |
|---|---|---|---|
| 1 | Übergabevorrichtung | 11 | Übertragungsband |
| 2 | Übertragungsförderer | 12 | Stange |
| 3 | Zuführband | 13 | Führung |
| 4 | Austrageband | 14 | Rahmenantrieb |
| 5 | Weitergabeband | 15 | Pleuelstange |
| 6 | Gegenstände | 16 | Gelenk |
| 7 | Zuführrichtung | 17 | Bandantrieb |
| 8 | Rahmen | 18 | Pleuelstange |
| 9 | Umlenkstelle | 19 | Gelenk |
| 10 | Umlenkstelle | 20 | Schwenkachse |
| | | | |
| 21 | Pfeil | 31 | Gelenk |
| 22 | Antrieb | 32 | Rahmen |
| 23 | Anfang | 33 | Rahmen |
| 24 | Austragsrichtung | | |
| 25 | Horizontalebene | | |
| 26 | Pufferband | | |
| 27 | Pufferrahmen | | |
| 28 | Umlenkstelle | | |
| 29 | Umlenkstelle | | |
| 30 | Band | | |

## Patentansprüche

1. Übergabevorrichtung für auf einem Zuführband (3) in Zuführrichtung (7) in Querreihen oder Gruppen ankommende Gegenstände (6), insbesondere empfindliche Süßwarenteile, wie Kuchenstücke, Neapolitains o. dgl., auf ein Austrageband (4), welches in einer zu der Zufuhrrichtung (7) insbesondere rechtwinklig verlaufenden Austragsrichtung (24) diskontinuierlich angetrieben wird, mit einem Übertragungsförderer (2), der einen Rahmen (8) und ein Übertragungsband (11) aufweist, das über einen Bandantrieb (17) in einer hin- und hergehenden Hubbewegung angetrieben ist, **dadurch gekennzeichnet**, daß der kurz ausgebildete Rahmen (8) des Übertragungsförderers (2) zwei Umlenkkanten (9, 10) für das darum geschlungene Übertragungsband (11) aufweist, daß der Bandantrieb (17) auf dem Rahmen (8) oder einem damit verbundenen Teil angeordnet ist, daß der Rahmen (8) des Übertragungsförderers (2) oder eines damit verbundenen Teils in einer translatorischen Führung (13) für den Rahmen (8) gelagert ist, und daß ein Rahmenantrieb (14) für eine hin- und hergehende Hubbewegung des Rahmens (8) in Abstimmung zu dem Bandantrieb (17) vorgesehen ist.

2. Übergabevorrichtung nach Anspruch 1, **dadurch gekennzeichnet**, daß der Rahmen (8) des Übertragungsförderers (2) um eine parallel zu den Umlenkkanten (9, 10) angeordnete Schwenkachse (20) schwenkbar ist, und/oder daß der Übertragungsförderer (2) mit seinem Rahmen (8) und Übertragungsband (11) höhenverfahrbar ausgebildet ist.

3. Übergabevorrichtung nach Anspruch 2, **dadurch gekennzeichnet**, daß der Übertragungsförderer (2) mit seiner einen Umlenkkante (9) zwischen einem Anschluß an das Zuführband (3) und einem Anschluß an das Austrageband (4) schwenkbar und/oder höhenverfahrbar ist, und daß für diese Bewegung ein oder mehrere Antriebe (22) vorgesehen sind.

4. Übergabevorrichtung nach einem oder mehreren der Ansprüche 1 bis 3, **dadurch gekennzeichnet**, daß zur Verteilung der Gegenstände (6) auf mindestens zwei Verarbeitungsstellen dem Zuführband (3) ein in Zuführrichtung (7) arbeitendes Weitergabeband (5) nachgeschaltet ist, daß das dem Weitergabeband (5) bzw. dem Übertragungsband (11) zugekehrte Ende des Zuführbandes (3) ortsfest angeordnet ist, daß zumindest der dem Ende des Zuführbandes (3) zugekehrte Anfang (23) des Weitergabebandes (5) um eine sich quer zur Zuführrichtung (7) erstreckende Achse schwenkbar ist.

5. Übergabevorrichtung nach einem oder mehreren der Ansprüche 1 bis 4, **dadurch gekennzeichnet**, daß das Übertragungsband (11) und zumindest der schwenkbare Teil des Weitergabebandes (5) mechanisch fest oder beweglich gekoppelt sind.

6. Übergabevorrichtung nach Anspruch 5, **dadurch gekennzeichnet**, daß die Schenkachse (20) des Übertragungsförderers (2) auf dem Rahmen (33) des Weitergabebandes (5) gelagert ist.

7. Übergabevorrichtung nach einem oder mehreren der Ansprüche 1 bis 4, **dadurch gekennzeichnet**, daß zwischen dem Übertragungsförderer (2) und dem Zuführband (3) ein Pufferband (26) vorgesehen ist, das einen Pufferrahmen (27) mit zwei Umlenkstellen (28, 29) und ein hin- und hergehend angetriebenes Pufferband (26) aufweist, und daß zumindest der schwenkbare Teil des Weitergabebandes (5) mit dem Pufferrahmen (27) des Pufferbandes (26) mechanisch fest oder beweglich gekoppelt ist.

8. Übergabevorrichtung nach einem oder mehreren der Ansprüche 1 bis 7, **dadurch gekennzeichnet**, daß das Pufferband (26), das Übertragungsband (11) und das Austrageband (4) oberhalb oder unterhalb der durch das Zuführband (3) festgelegten Horizontalebene (25) angeordnet sind.

9. Übergabevorrichtung nach einem oder mehreren der Ansprüche 7 und 8, **dadurch gekennzeichnet**, daß das Pufferband (26) und zumindest der schwenkbare Teil des Weitergabebandes (5) einen gemeinsamen Rahmen (27, 33) aufweisen.

10. Übergabevorrichtung nach einem oder mehreren der Ansprüche 7 bis 9, **dadurch gekennzeichnet**, daß der Rahmen (8) des Übertragungsbandes (11) in der translatorischen Führung (13) auf dem Zuführband (3) gelagert ist.
